# EUROPEAN PATENT APPLICATION

(11) **EP 2 811 711 A1**
(43) Date of publication of application: **10.12.2014**
(21) Application number: 13305754.7
(22) Date of filing: 05.06.2013
(51) Int. Cl.: H04L 29/06

(54) **Nodes and methods for use in HAS content distribution systems**

(71) Applicant: ALCATEL LUCENT, 92100 Boulogne-Billancourt (FR)
(72) Inventor: De Vleeschauwer, Danny, 9940 Evergem (BE)
(74) Representative: D'Halleweyn, Nele Veerle Trees Gertrudis

(57) **Abstract**

A network node, suited for use in a content delivery system for use in between at least one server node, adapted for delivering a part of content over a network on request, and at least one client node, said network node being adapted for receiving a request for a part of content in one of multiple versions, issued by a client node of said at least one client nodes; determining if it will be capable to transmit said part of content in the requested version upon receipt thereof, if so, requesting and receiving said part of content from said server node and transmitting said part of content to said client node and otherwise informing said client node that it is not capable to transmit said part of content in the requested version.

## Description

### Field of the invention

The present invention relates to the field of HAS content distribution systems, in particular improving the fairness for clients thereof.

### Background

A method to deliver video over IP (Internet Protocol)-based networks is HAS (HTTP (Hyper Text Transport Protocol) Adaptive Streaming). This method has the advantage that it is easily deployable, because (i) it traverses firewalls and NATs (Network Address Translators) more easily than UDP/RTP (User Datagram Protocol/Real-time Transport Protocol) based video delivery, (ii) it has inherent congestion control as it relies on TCP (Transport Control Protocol) and it can make use of the available HTTP infrastructure, in particular, of HTTP caches and CDN (Content Distribution Network) nodes.

The described system is unfair in that it does not offer an equal quality to each client independent of the RTT and the complexity of the videos.

### Summary

The object of embodiments of the invention is to solve the unfairness in content distribution systems as described above.

According to a first aspect of the invention there is provided a (electronic) network node, device or system, suited for use in a (streaming) (multimedia) content (such as video and/or audio) delivery system (over a network) for use in between at least one server node, adapted for delivering a part of content within the network on request, and at least one client node, adapted for (i) receiving a part of content available in the network at any node within the network such as the server node or any other intermediate node and (ii) issuing a request for a part of content (preferably in one of multiple versions). Said network node is adapted for (iii) receiving a request for a part of content (in one of said multiple versions) issued by a client node of said at least one client nodes; (iv) determining if it will be capable to transmit said part of content (in the requested version) upon receipt thereof, (v) if so, requesting and receiving said part of content from said server node and transmitting said part of content to said client node and (vi) otherwise informing said client node that it is not capable to transmit said part of content (in the requested version).

In an embodiment of the invention while the client nodes, server nodes and intermediate network nodes may be connected in various network architectures, the network node serves and is capable to serve as a bottleneck node, hence the network node being for said at least one client a bottleneck for receiving content over the network, said network node alleviates congestion for said client.

In an embodiment of the invention the network node is adapted to use for the communication (with the client and/or server nodes) on a communication protocol expecting responses to request within a predetermined time frame (related to the transmission protocol operable on the network).

In an embodiment of the invention the network node is operable in a network being arranged to support selection of an appropriate version (related to selecting a possible quality of display of the content) on a per part basis (denoted per segment for video, whereby each version of such segment being a chunk) to thereby support so-called adaptive streaming.

In an embodiment of the invention, the network node is arranged to receive and transmit said content in packetized format (IP).

One or more of the mentioned embodiments can be combined and preferably the network node is adapted to operate in an Internet Protocol based network using Hyper Text Transport Protocol Adaptive Streaming to deliver content (such as video and/or audio).

In a preferred embodiment, the network node is further suited for use in between a server node, adapted to provide one or more parts of content (video) in a plurality of encoded layers, and a client node, adapted to issue a request for one or more part of content (video) in particular encoded layer; wherein said network node is adapted in that said step of determining takes into account the particular requested encoded layer.

In another preferred embodiment, said network node is further adapted to take into account an amount of requests during a predetermined time duration received from (a plurality of) said at least one client nodes by said network node, preferably this predetermined time duration is related to the previous time period (hence it is assumed that such instantaneous amount of that period has predictive value for the time period to come), optionally also the instantaneous amount of requests received from said at least one client nodes by said network node during the actual period (as measured) is taken further into account when determining if it will be capable to transmit a part of content (video). Any combination of current and/or past (also here one or more) can be used for instance in a weighting procedure.

In another preferred embodiment said network node is adapted in that said steps (iii), (iv), (v) and (vi) are selected to improve the (overall) fairness between said plurality of clients.

In another preferred embodiment, said network node is adapted in that said steps (iii), (iv), (v) and (vi) are being applied only for the part of content (video) made available in a predetermined set of encoded layers; while for the same part of content (video) available in other encoded layers, the request is forwarded to said server node and said network node receives said part of content (video) from said server node and transmits said part of content (video) to said client node.

It is a second aspect of the invention to provide a (streaming) (multimedia) content (such as video and/or data) delivery system (over a network) comprising: (1) at least one server node, adapted for delivering a part of content (preferably in one or more versions), over the network on request (in a requested version); (2) at least one client node, adapted for (i) receiving a part of content available via the network, at the server node or any other intermediate node and (ii) issuing a request for a part of content (in one of multiple versions); (3) a network node (bottleneck node), in between said at least one server node and said at least one client node, the network node is adapted for (iii) receiving a request for a part of content in a requested version issued by a client node of said at least one client nodes, (iv) determining if it will be capable to transmit said part of content(in the requested version), (v) if so, requesting and receiving said part of content from said server node (in the requested version) and transmitting said part of content to said network node (in the requested version) and (vi) otherwise informing said client node that it is not capable to transmit said part of content (in the requested version).

In an embodiment of the invention, while the client nodes, server nodes and intermediate network nodes may be connected in various network architectures, the network nodes serves and is capable to serve as a bottleneck node, hence the network node being for said at least one client a bottleneck for receiving content over the network, said network node alleviates congestion for said client.

In an embodiment of the invention, said nodes are adapted to use for the communication between each other on a communication protocol expecting responses to request within a predetermined time frame (related to the transmission protocol operable on the network).

In an embodiment of the invention, said nodes are adapted to support selection of an appropriate version (related to selecting a possible quality of display of the content) on a per part basis (denoted per segment (whereby a chunk is a version thereof) for video) to thereby support so-called adaptive streaming.

In an embodiment of the invention, said nodes are arranged to receive and transmit said content in packetized format (IP).

One or more of the mentioned embodiments can be combined and preferably said nodes are adapted to operate in an Internet Protocol based network using Hyper Text Transport Protocol Adaptive Streaming to deliver content (such as video and/or audio).

In a more preferred embodiment, said server node is adapted to provide for each of said parts of content in a plurality of encoded layers, wherein said client node is adapted to associate with said request a particular encoded layers; and wherein said network node is adapted in that said step of determining takes into account on the particular associated encoded layer.

In another more preferred embodiment, said network node is being further adapted to take into account an instantaneous amount of requests received from said at least one client node, or also a previous instantaneous amount of requests received from said at least one client node or weighted combinations thereof, when determining if it will be capable to transmit a part of content.

In an exemplary embodiment, said server node(s) are provided with a video encoder, preferably a scalable video encoder, capable of delivering each of said parts in said plurality of encoded layers.

In another preferred embodiment, said network node is adapted in that said steps (iii), (iv), (v) and (vi) are selected to improve the (overall) fairness between said plurality of clients.

In another preferred embodiment, said network node is adapted in that said steps (iii), (iv), (v) and (vi) are being applied only for the part of content (video) made available in a predetermined set of encoded layers; while for the same part of content (video) available in other encoded layers, the request is forwarded to said server node and said network node receives said part of content (video) from said server node and transmits said part of content (video) to said client node.

In a further preferred embodiment thereof, said predetermined set of encoded layers being all layers provided by said scalable video encoder, except the base layer (being part of the other encoded layers).

In another preferred embodiment, said client node, based on said information received from said network node, proceeds with requesting a next part of content (video).

In yet another preferred embodiment (for instance an AVC client), said client node, based on said information received from said network node, proceeds with issuing a new request for the same part of content (video) but with an associated encoded layer being less demanding than previous request.

In an alternative preferred embodiment (for instance an Advanced Video Codec (AVC), like H264 AVC or MPEG4 part 10 AVC client), said client node, based on said information received from said network node, may decide (i) to proceed with requesting a next part of content (video) or (ii) to proceed with issuing a new request for the same part of content (video) but with an associated encoded layer being less demanding than previous request, optionally the decision between (i) or (ii) is made by measuring its own play out buffer and/or trying to take account other client request (as far as the message received for the network node provides such information).

In an alternative preferred embodiment (for instance an Scalable Video Codec (SVC), like H264 SVC or MPEG4 part 10 SVC client), said client node, based on said information received from said network node, may decide (i) to proceed with requesting a next part of content (video) or (ii) to proceed with issuing a new request for the same part of content (video), optionally the decision between (i) or (ii) is made by measuring its own play out buffer and/or trying to take account other client request (as far as the message received for the network node provides such information).

According to a third aspect of the invention, to provide a (electronic) client node, device or system suited for use in a (streaming) (multimedia) content (such as video and/or) delivery system (over a network) for (i) receiving a part of content available via the network at a server node or an intermediate node adapted for delivering a part of content (preferably in one or more versions) on request and (ii) issuing a request for a part of content (in a requested version), further being adapted for receiving information of at least one network node, suited for use in between at least one client node and at least said server node, said information indicating that said network node determined that it will not be capable to transmit said part of video data requested (in said requested version).

In an embodiment of the invention, the client node is capable of displaying said content (video) (and hence is the real client serving a user).

In an alternative embodiment of the invention, the client node is a node, which can be (uniquely) associated to a further node, which is capable of displaying said content (video) (and hence is the real client serving a user, but may have less computational or storage capabilities than the first node), whereby the first node is capable of representing (for instance by emulating the behavior of) said further node.

In a preferred embodiment, one or more of said parts of content (video) are available at the server node or equivalent or intermediate node in a plurality of encoded layers, and said client node is adapted to associate with said request a particular encoded layer for the part of content (video) it requests.

In yet another preferred embodiment, said node is adapted to proceed with requesting a next part of content (video) based on said information received from said network node.

In an alternative preferred embodiment, said node is adapted to proceed with issuing a new request for the same part of content (video), but with an associated encoded layer being less demanding than previous request based on said information received from said network node.

In yet another alternative preferred embodiment, said node is adapted to either decide (i) to proceed with requesting a next part of content (video) or (ii) to proceed with issuing a new request for the same part of content (video) but with an associated encoded layer being less demanding than previous request, based on said information received from said network node.

Any one of the mentioned embodiments or preferred embodiment can be combined with the following embodiments (which can be combined themselves).

In an embodiment, the client node is adapted to use for the communication with the other nodes on a communication protocol expecting responses to request within a predetermined time frame (related to the transmission protocol operable on the network).

In an embodiment, the client node is adapted to support selection of an appropriate version (related to selecting a possible quality of display of the content) on a per part basis (denoted per chunk for video) to thereby support so-called adaptive streaming.

In an embodiment of the invention, said client node is arranged to receive and transmit said content in packetized format (IP).

One or more of the mentioned embodiments can be combined and preferably said node is adapted to operate in an Internet Protocol based network using Hyper Text Transport Protocol Adaptive Streaming to deliver content (such as video and/or audio).

It is fourth aspect of the invention to provide a method for operating a (electronic) network node, device or system (bottleneck node), for use in a (streaming) (multimedia) content (such video and/or audio) delivery system (over a network) and suited for use in between at least one server node, adapted for delivering a part of content (preferably in one or more versions) over a network on request and at least one client node, adapted for (i) receiving a part of content available via the network at any node within the network such as the server node or any other intermediate node and (ii) issuing a request for a part of content (in a request version), the method comprising the steps of (iii) receiving a request for part of content (in a request version) issued by a client node of said at least one client nodes; (iv) determining if it will be capable to transmit said part of content (in said requested version) upon receipt thereof, (v) if so, requesting and receiving said part of content (in said requested version) from said server node and transmitting said part of content (in said requested version) to said client node and (vi) otherwise informing said client node that it is not capable to transmit said part of content (in said requested version).

It is a fifth aspect of the invention to provide computer program products, operable on a (electronic) processing engine (part of either of said nodes described before), for executing any of the steps described before) and/or executing the method of the previous aspect.

In a sixth aspect of the invention, a non-transitory machine readable storage medium storing the computer program products of the fifth aspect is provided.

Although nodes, network, methods, computer program products and storage media have been described hereinabove as separate aspects, this is done for clarity purposes only, and it should be noted that features described only in connection with one aspect may be applied in the other aspect according to the present invention to obtain the same technical effects and advantages, and vice versa.

### Brief description of the Figures

Some embodiments of the systems, nodes or devices and/or methods in accordance with embodiments of the present invention are now described, by way of example only, and with reference to the accompanying drawings, in which:
Figure 1 (prior-art) shows a network with a client node, a network or bottleneck node and a server node, using a standard enabling use of scalable video coding, in which network embodiments of the invention can be deployed;
Figure 2 (prior-art) shows a network with a client node, a network or bottleneck node and a server node, also using a standard enabling use of scalable video coding, but on a different network (non-HAS) than for which embodiments of the invention are intended;
Figure 3 shows a network with a client node, a network or bottleneck node and a server node, using a standard enabling use of scalable video coding, in which network embodiments of the invention can be deployed;
Figure 4 shows the effect of using embodiments of the invention, in particular the improved video fairness;
Figure 5 illustrates the operation of the network node or proxy; and
Figure 6 shows the steps of the method in the network node and the interactions between the network node and the client and server node.

### Description of Embodiments

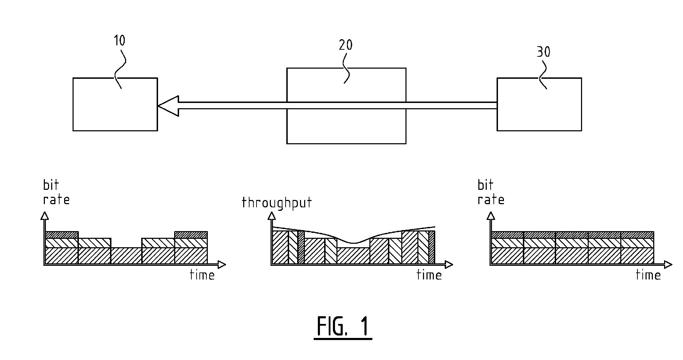

The design principle of HAS are as follows (see Figure 1). The video is encoded at different bit rates and the client can switch between these bit rate versions at specified moments in times. How the video is encoded is described in a manifest file that is transported to the video client prior to downloading video data (and that may be updated later). The interval of video between two consecutive possible switching times is denoted a video segment and the associated bit strings (one bit strings per available quality versions) with that interval as chunks. Hence, there are as many chunks associated with each video segment as there are quality versions. In the existing implementations (e.g., Apple Live Streaming, Silverlight Smooth Streaming, Adobe Dynamic Streaming), the chunks are downloaded via consecutive HTTP GET requests which travel over one or more TCP (Transport Control Protocol) connections. In order to select which chunk to download for the next video segment, the client (1) monitors the available network throughput, in particular the throughput offered by TCP, it sees for the download of previous chunks and (2) tries to match the video bit rate (for the next chunk) to this available network throughput. Because the requested video bit rate cannot match the available network bit rate exactly the client needs to maintain a play-out buffer.

The described system is unfair in the following sense. The throughput that TCP offers depends on the RTT (Round Trip Time) the clients see. A client with a large RTT sees a lower throughput, and hence, a lower quality video. Moreover, some videos (with typically lots of detail and incoherent motion) need a higher bit rate than others to attain the same quality. An ideal video distribution system offers an equal quality to each client independent of the RTT and the complexity of the videos, where the quality that can be offered to all videos depends on the congestion state of the network.

One of the embodiments of the invention will be demonstrated for a HAS client that makes use of SVC as known in the prior art, e.g., hooks for SVC-based clients are foreseen in the DASH (Dynamic Adaptive Streaming over HTTP) standard. "EP2408205 (A1) - A video server, video client and method of scalable encoding video files" describes such a client. Such an SVC-based client is more versatile than a traditional client. A traditional client should be careful in the decision it makes on which (quality version of the) chunk to download for the next video segment. If the decision is too aggressive, the video buffer risks draining too much (and ultimately a video freeze could result). If the decision is too conservative (in the sense that a chunk of higher quality could have been downloaded), it is difficult to recall this decision, i.e., it is inefficient to ask for a higher quality version chunk, as the transport of the lower quality chunk would be wasted. In contrast, an SVC-based client can make at any time a HTTP GET request is fulfilled, one of two decisions: it can either move on to download the base layer chunk for the next video segment or decide to download the next enhancement layer chunk for the current video segment. Since the client can gradually build up the quality in this way, the decisions it makes will never result in the transport of wasted information. The SVC-based client can still be too aggressive though, risking draining its own play-out buffer or hampering the quality attained by other clients too much. This is where embodiments of the invention provide a solution.

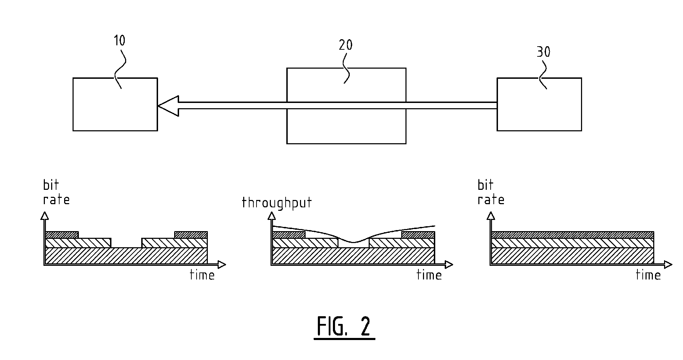

A similar problem was solved in related domains, but these solutions cannot be directly applied in HAS:
***1)*** ***Video rate shaping** (also referred* to *as "statistical multiplexing").* When a limited number of video sequences needs to be multiplexed on a channel of constant bit rate (e.g., in the digital transport of "live" video programs over a cable or satellite channel), the encoding process of these videos consists of two steps. In a first step (which runs a few seconds in advance of the second step), the complexity of each video sequence is determined. This complexity of each video is expressed as the quality that can be reached as a function of the bit rate, i.e., the temporary rate-distortion curve for each video is assessed. These rate-distortion curves are used in the second step (i.e., the actual encoding step) in which the available bits are distributed over all video sequences to be multiplexed such that each video sequence attains (more or less) the same quality. Various coding vendors offer a solution like this. This solution cannot be extended to HAS as this kind of system requires feedback of all clients that share the same link. In HAS, none of the entities (neither encoder, nor any network node) has this knowledge of all clients.
2) ***Choking-based congestion control.*** For video transported over UDP/RTP a solution is described in "US2012155258 (A1) - Method and Apparatus for Congestion Control". The system (shown in Figure 2) described in that patent consists of two building blocks. First, each video is encoded in layers using SVC (Scalable Video Coding). That is, the encoded video flow consists of a base layer and a number of enhancement layers, which all are sent into the network towards the clients. The base layer corresponds to the lowest video quality. When a client gets access to an additional enhancement layer, the quality can be increased by one increment. Second, an active network node determines (depending on its congestion state) which layers it can support and drops the packets of the layers that it temporary cannot support. In that way the clients get an equal quality depending on the congestion state. This solution cannot be used for HAS, as dropped packets will result in TCP retransmitting them and has as detrimental side-effect that the TCP throughput will suffer, which will decrease the overall performance of the system.

In the context of HAS some techniques were proposed, but they do not completely solve the problem:
3) **Manifest file re-writing.** In such a system a proxy intercepts the manifest file and deletes some entries before relaying it to clients. In that way clients are not aware of certain quality versions, and hence, do not request these. Although manifest files can be update during video delivery, this technique does not have the required granularity to react to congestion fast enough.
4) **SVC-based clients with prioritization in the network.** In "EP2408205 (A1) - A video server, video client and method of scalable encoding video files" a method is described for a HAS client based on SVC. The base layer is transported over a bit pipe that receives priority treatment in the network, while enhancement layers are transported over bit pipes that receive lower priority. As a result the base layer chunks always reach the destination in time, while enhancement layer chunks can get delayed, and hence, when there is congestion the clients will be less inclined to the download the latter. This invention does not solve the fairness problem addressed here, as clients in worse conditions (e.g., with a high RTT) will be worse off than clients in good conditions.

Embodiments of the invention propose specialized nodes, methods executed on such nodes, network with such nodes and related software (and storage media thereof) for use in content delivery system, which otherwise may introduce unfairness between clients. In particular, the network between the client and the server may include a wireless link (*e.g.*, an IEEE 802.11 WLAN link, a mobile link such as UMTS, 3G, LTE, ...) and/or a wired link (*e.g.* an IEEE 802.3 "Ethernet" link, a PLC link, an xDSL link, a coax link, etc.).

Embodiments of the invention are now demonstrated in the context of HAS and video content delivery but is not limited thereto.

The underlying network is a packetized data based network like IP (Internet Protocol)-based networks. HAS (HTTP (Hyper Text Transport Protocol) Adaptive Streaming). This method relies on TCP (Transport Control Protocol) and HTTP infrastructure. The video is encoded at different bit rates and the client can switch between these bit rate versions at specified moments in times. Typically the chunks (video segment encoded in accordance with a certain bit rate) are downloaded via consecutive HTTP GET requests which travel over one or more TCP (Transport Control Protocol) connections.

The proposed adaptations or specialization of the nodes and related methods can be implemented by adapting (overriding) the congestion control offered by TCP and use HTTP only for its two other advantages: 1) that it allows easy traversal of firewalls and NATs and 2) that it can make use of the deployed HTTP infrastructure. Obviously the invention is not limited thereto. A network with an entirely other type of congestion control and/or request handling mechanism can be used also.

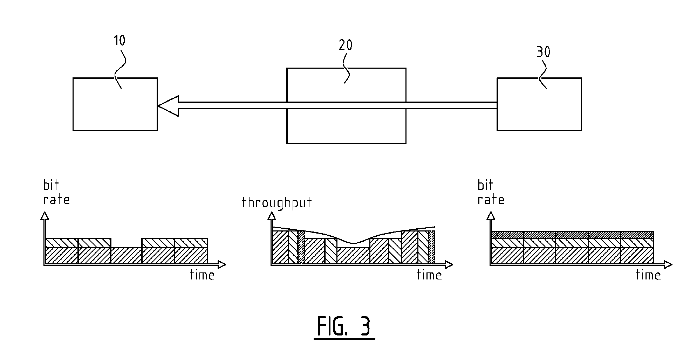

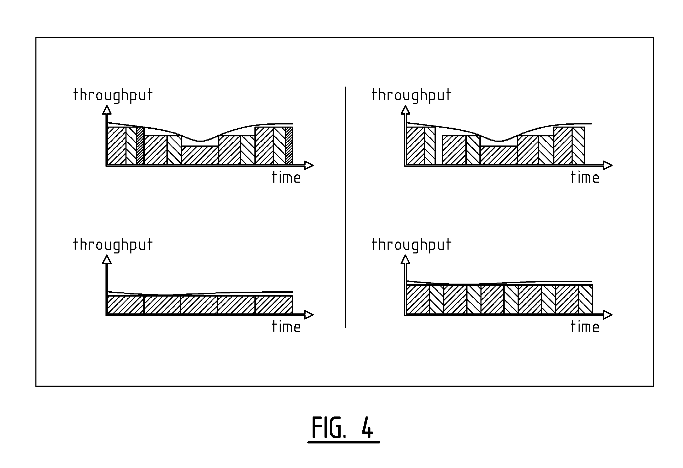

It is an aspect of this invention (as illustrated in Figure 3) to let a proxy (bottleneck node) inspect the (all) HTTP GET requests that are issued by the clients that it serves. If this proxy deems that the chunk a client asks is not compatible with its congestion state, it sends a HTTP response message (e.g. "4xx message", e.g. "403 Forbidden" or "405 Method Not Allowed") to the client indicating that the requested chunk is temporary unavailable. Otherwise it relays the HTTP GET request to the server (or the cache). Figure 4 shows how this would alter the behavior of the video distribution system.

In essence hence a content delivery system is provided comprising (1) at least one server node, adapted for delivering a part (segment) of content (video) in one or more versions (bit rates) (thereby defining a chunk), over a network on request in a requested version; (2) at least one client node, adapted for (i) receiving a part of content video data available via the network and (ii) issuing a HTTP GET request for a part of content in one of multiple versions, hence having the capability to switch between these bit rate versions at specified moments in times; (3) a network node or proxy, in between said at least one server node and said at least one client node, the network node is adapted for (iii) receiving a request for a part of content in a requested version issued by a client node of said at least one client nodes, (iv) determining if it will be capable to transmit said part of content in the requested version, (v) if so, requesting and receiving said part of content from said server node in the requested version and transmitting said part of content to said network node in the requested version and (vi) otherwise informing said client node that it is not capable to transmit said part of content in the requested version by sending a HTTP response message.

In a preferred embodiment based on a layered codec such as SVC (wherein preferably requests for base layers chunks are always allowed), the client takes this "4xx message" as a cue to move on to downloading the base layer chunk of the next video segment.

Figure 1 shows a network with a client node (10), a network or bottleneck node (20) and a server node (30), using a standard enabling use of scalable video coding. Embodiments of the invention can be deployed on such a network. The figure shows the bitrate of the client and server and the throughput of the network node. The DASH client estimates the available throughput, downloads as many (encoded) layers (one of the other) such that the play-out buffer builds up (in buffering mode) and does not alter too much in steady state. The network node does not have an active part in this process. The server makes available segments of the video in hierarchical layers and waits for requests from the client. It is clear that the video quality (reflected by the different shades in the graphs representing the used layers) depends on TCP throughput (which depends on RTT, loss, ...). In essence this results in unfairness between several clients. Figure 2 shows a network with a client node (10), a network or bottleneck node (20) and a server node (30), also using a standard enabling use of scalable video coding, but on a different network (non-HAS) than for which embodiments of the invention can be deployed, in particular since here the bottleneck node may drop packets. Here the client does not have an active role in the process. The bottleneck node discards (packets of) layers depending on the congestion it experiences. All videos are affected in the same way. The server sends the video stream in hierarchical layers in the network. The video quality is the same for every user and hence establishes a similar fairness as embodiments of the invention want to achieve be it for another type of network. Figure 3 shows a network with a client node (10), a network or bottleneck node (20) and a server node (30), using a standard enabling use of scalable video coding. Embodiments of the invention can be deployed on such a network. The DASH client works as in Figure 1 but knows that some HTTP GET requests will not be granted. The bottleneck node or network proxy inspects HTTP GET request messages. If the congestion is high, the bottleneck node blocks HTTP GET requests for the highest layers and sends a 4xx HTTP response message to the client. The server makes available segments of the video in hierarchical layers and waits for requests from the clients (that it gets via the network node or not if they are blocked). The network node has an active part in this process.

In another embodiment based on a non-scalable codec, the client needs to take this "4xx message" as a cue to issue a request for a lower quality chunk for the current video segment.

The preferred embodiment based on a layered codec (e.g.*,* SVC) is now discussed in more detail.

In an even more preferred embodiment, the invention is used by a HAS client that makes use of SVC. An SVC-based client can make at any time a HTTP GET request is fulfilled, one of two decisions: it can either move on to download the base layer chunk for the next video segment or decide to download the next enhancement layer chunk for the current video segment. Since the client can gradually build up the quality in this way, the decisions it makes will never result in the transport of wasted information. The SVC-based client can still be too aggressive though, risking draining its own play-out buffer or hampering the quality attained by other clients too much. With embodiments of the invention described here the SVC-based client does not need to worry about being too aggressive: the proxy has a better view on the requests of all clients and of the congestion level of the network and can refuse the requests for enhancement layers that the network cannot support. The only required change to the SVC-based client is that it will need to interpret the "4xx message" in the correct way. Correctly interpreting the "4xx message" is the minimal required change to an existing SVC-based client. In the extreme case, an SVC-based client could completely rely on the proxy: it can try to download progressively more enhancement layer chunks for the current video segment until it gets a "4xx message" in which case it moves on to request the base layer chunk of the next video segment. If the SVC-client is still more aggressive than this (e.g., if it insists in asking all the enhancement layer chunks for a video segment), the results will not be fundamentally different, as it will just result in more "4xx messages" being sent by the proxy. If an SVC-client is less aggressive, it just leaves more transport capacity for the other clients. Figure 4 shows the effect of using embodiments of the invention, in particular the improved video fairness in case of two clients. The left hand side shows a traditional implementation on a HAS network, while the right hand side shows the use of embodiments of the invention on such network. The top drawings represent the throughput for a client in good condition (for instance having a small RTT) while the bottom drawing represent the client in bad conditions (for instance having a large RTT). It is clear that the active discarding HTTP GET requests (possible for requests for an encoded layer above a certain threshold K) and responding by a 4xx message to the client, that the clients in good conditions free up resources that can be taken up by the clients in bad conditions, thus improving the video fairness.

In essence the SVC client node may, based on said HTTP message information received from said network node or proxy, decide (i) to proceed with requesting a next part of content or (ii) to proceed with issuing a new request for the same part of content.

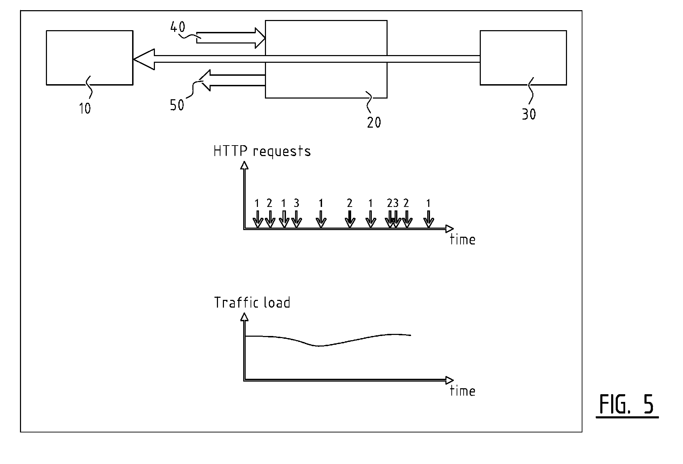

For the remainder of this embodiment, an exemplary embodiment describing how the proxy works is provided. For sake of illustration it is assumed that each video was encoded in L layers (but embodiments of the invention are operable for a variable amount of layers over the different clients). Layer 1 is the base layer and corresponds to the basic quality (the minimal quality that the content provider wants to offer). Note that as this base-layer quality is designed to be the same for all videos, the bit rate (or chunk size in bytes) of the base layer of each of the videos can deviate from a nominal value. Layer 2, 3, ... are the (hierarchical) enhancement layers. One enhancement layer brings a quality increment that is designed to be the same for all videos, and hence, the bit rate of an enhancement layer can fluctuate around a nominal value as well. Let b₁ be the nominal bit rate of layer 1 relative to the bit rate of the output interface of the proxy. The proxy performs the following actions (see Figure 5):
1) It measures the smoothened number of requests R_{l,i} for layer 1 in interval [(i-1)·D, i·D[ as follows, where D is the typical duration of a video segment:
   - The number of requests N_{l,i} for layer 1 in interval [(i-1)·D, i·D[ is counted,
   - These numbers are smoothened as follows: R_{l,i}=(1-a)·R_{l,i}-₁+a·N_{l,i}, where a is a tunable value in the interval [0,1].
2) It predicts the (virtual) traffic loads r_{k,i} in interval [i·D, (i+1)·D[ as follows: r_{k,i} =Σ_{l=1..k} (b₁·R_{l,i}).
3) It allows requests for layers up to layer K in interval [i·D, (i+1)·D[ if r_{K,i} ≤1< r_{K+1,i}.

Although alternative ways to perform step 1 to 3 can be envisioned, the principle should remain the same: the proxy determines the load r_{k,i} it anticipates in the next interval [i·D, (i+1)·D[ when it would allow requests for chunks up to layer k (based on observations in interval [(i-1)·D, i·D[), and then chooses the number of layers it actually will support over the next interval [i·D, (i+1)·D[ such that there will just be no congestion (i.e., such that the traffic load will just be smaller than 1). Optionally, in order to determine the values bₖ more accurately the proxy can correlate r_{K} (it predicted) with the actual observed traffic load (which the proxy also can measure easily).

Figure 5 shows a network with a client node (10), a network or bottleneck node (20) and a server node (30), using a standard enabling use of scalable video coding. Embodiments of the invention can be deployed on such a network. Figure 5 illustrates the operation of the network node or proxy. The proxy sees HTTP GET messages (40) requesting layers. In the top graph shows the request represented by an arrow with a number indicative for the requested (encoded) layer (1 is base layer while the other are enhancement layers). The proxy operates on said HTTP GET messages and this results in a certain traffic load (50) that the proxy may optionally measure at its output interface (for use in its operational methods).

Generally speaking the network node is adapted to take into account either an instantaneous amount of requests received from a plurality of said at least one client nodes by said network node or in a predictive mode the previous instantaneous amount of requests received from plurality of said at least one client nodes by said network node or both when determining if it will be capable to transmit a part of content.

Although the preferred embodiment described above is one with an SVC-based client, the system can also work with an altered version of a traditional client based on a non-layered codec. In this case the traditional client just needs to be changed such that it is able to interpret the "4xx message" in the correct way, i.e., after receiving such a "4xx message" such the (altered) client should re-issue a request a chunk of lower quality for the same video segment, until it receives the information it requested. The working of the proxy for such clients is very similar to the one described for AVC-based clients. In such embodiment the said client node based on said HTTP response message information received from said network node proceeds with issuing a new HTTP request for the same part of content but with an associated encoded layer being less demanding than previous request.

As a conclusion, it can be stated that embodiments of the invention contrary to video rate shaping (also referred to as "statistical multiplexing) are operable on network which operates decentralized, in that no central decision is taken nor complex information like rate-distortion curves are exchanged. In embodiments of the invention the server node is not changed. It is only the bottleneck node, being capable of issuing to the client node a (HTTP) message, based on analyzing the (HTTP) request it receives or has received (predictive mode). Further the client nodes are adapted to use such (HTTP) message. Further contrary to choking-based congestion, using an active network node for dropping the packets of the layers that it temporary cannot support which would contravene with the TCP, the invented solution is compatible for use for HAS, as no packet dropping occurs.

Embodiments of the invention propose a HAS compatible solution not operating on the manifest file nor does it provide a priori prioritization for SVC-based clients, on the contrary the technical effect of embodiments of the invention is precisely to improve the fairness across clients, even if they operated in different conditions.

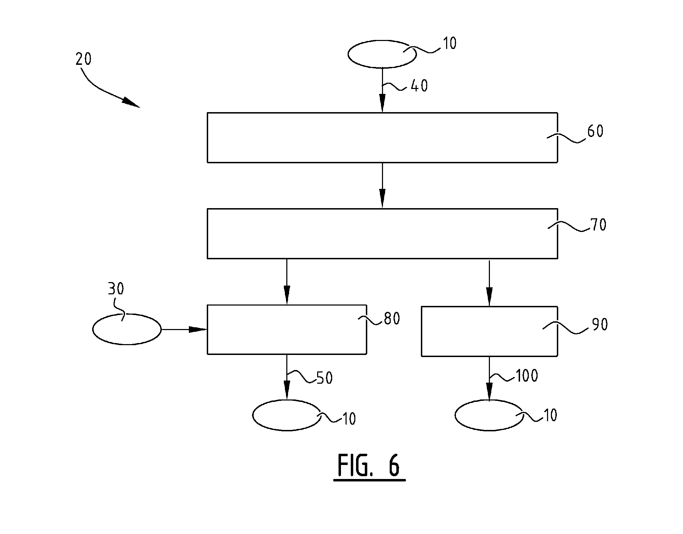

Figure 6 shows the steps of the method in the network node (20) and the interactions between the network node and the client (10) and server node (30), more in particular the receiving (60) of the HTTP message (40) from the client, the determining of the action to be taken (70), and hence either requesting from the server and forwarding to the client (80), thereby generating traffic (50) to the client, or the step of sending (90) a HTTP response message (100) thereto.

The functions of processing engine, being part of either one of the nodes may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term processor should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A network node (20), suited for use in a content delivery system for use in between at least one server node (30), adapted for delivering a part of content over a network on request, and at least one client node (10), said network node being adapted for (iii) receiving a request (40) for a part of content in one of multiple versions, issued by a client node of said at least one client nodes; (iv) determining if it will be capable to transmit said part of content in the requested version upon receipt thereof, (v) if so, requesting and receiving said part of content from said server node and transmitting said part of content (50) to said client node and (vi) otherwise informing said client node that it is not capable to transmit said part of content in the requested version.

2. The network node of claim 1, further being suited for use in between a server node, adapted to provide one or more parts of content in a plurality of encoded layers, and a client node, adapted to issue a request for one or more part of content in particular encoded layers; wherein said network node is adapted in that said step of determining takes into account the particular requested encoded layer.

3. The network node of claim 1 or 2, wherein said network node is further adapted to take into account an amount of requests within a predetermined time period received from a plurality of said at least one client nodes by said network node when determining if it will be capable to transmit a part of content.

4. The network node of claim 1, 2 or 3, wherein said steps (iii), (iv), (v) and (vi) being applied only for the part of content made available in a predetermined set of encoded layers; while for the same part of content available in other encoded layers, the request is forwarded to said server node and said network node receives said part of content from said server node and transmits said part of content to said client node.

5. A content delivery system comprising:
(1) at least one server node (30), adapted for delivering a part of content in one or more versions, over a network on request in a requested version;
(2) at least one client node (10), adapted for (i) receiving a part of content video data available via the network and (ii) issuing a request (40) for a part of content in one of multiple versions;
(3) a network node (20), in between said at least one server node and said at least one client node, the network node is adapted for (iii) receiving a request (40) for a part of content in a requested version issued by a client node of said at least one client nodes, (iv) determining if it will be capable to transmit said part of content in the requested version, (v) if so, requesting and receiving said part of content from said server node in the requested version and transmitting said part of content (50) to said client node in the requested version and (vi) otherwise informing said client node that it is not capable to transmit said part of content in the requested version.

6. The network of claim 5, wherein said server node is adapted to provide for each of said parts of content in a plurality of encoded layers, wherein said client node is adapted to associate with said request a particular encoded layers; and wherein said network node is adapted in that said step of determining takes into account on the particular associated encoded layer.

7. The network of claim 5 or 6, wherein said network node being further adapted to take into account an amount of requests within a predetermined time period received from a plurality of said at least one client nodes when determining if it will be capable to transmit a part of content.

8. The network of any of the previous claims 5 to 7, wherein (a) said client node based on said information received from said network node proceeds with requesting a next part of content or (b) said client node based on said information received from said network node proceeds with issuing a new request for the same part of content, optionally with an associated encoded layer being less demanding than previous request or (c) said client node based on said information received from said network node may decide to (i) proceed with requesting a next part of content or (ii) proceeds with issuing a new request for the same part of content, optionally with an associated encoded layer being less demanding than previous request.

9. A client node (10) suited for use in a content delivery system for (i) receiving a part of content (50) available via a network adapted for delivering a part of content in one or more versions on request and (ii) issuing a request (40) for a part of content in a requested version, further being adapted for receiving information of at least one network node (20), suited for use in between at least one client node and at least said server node, said information indicating that said network node determined that it will not be capable to transmit said part of video data requested in said requested version.

10. The node of claim 9, further each of said parts of content being available in a plurality of encoded layers, and wherein said node being adapted to associate with said request a particular encoded layer for the part of content it requests.

11. The node of any of the claims 9 or 10, wherein said node being adapted to proceed with requesting a next part of content based on said information received from said network node.

12. The node of any of the claims 9 or 10, wherein said node being adapted to proceed with issuing a new request for the same part of content but with an associated encoded layer being less demanding than previous request based on said information received from said network node.

13. A method for operating a network node (20) for use in a content delivery system and suited for use in between at least one server node (30), adapted for delivering a part of content in one or more versions over a network on request and at least one client node (10), adapted for (i) receiving a part of content (50) available via the network and (ii) issuing a request (40) for a part of content in a request version, the method comprising the steps of (iii) receiving (60) a request (40) for part of content in a request version issued by a client node of said at least one client nodes; (iv) determining (70) if it will be capable to transmit said part of content in said requested version upon receipt thereof, (v) if so, (80) requesting and receiving said part of content in said requested version from said server node and transmitting said part of content (50) in said requested version to said client node and (vi) otherwise (90) informing said client node that it is not capable to transmit said part of content in said requested version.

14. A computer program product, operable on a processing engine, for executing any of the steps (i) to (vi) of claims 1 to 4 and/or steps (i) to (ii) of claims 9 to 12 and/or executing the method of claim 13.

15. A non-transitory machine readable storage medium storing the computer program products of claim 14.
